# EUROPÄISCHE PATENTSCHRIFT

(11) **EP 0 650 997 B1**
(45) Veröffentlichungstag und Bekanntmachung des Hinweises auf die Patenterteilung: **05.02.1997**
(21) Anmeldenummer: 94114131.9
(22) Anmeldetag: 08.09.1994
(51) Int. Cl.: C08G 77/12, C08G 77/18, C08G 77/46

(54) **Hydrophile Gruppen aufweisende Organopolysiloxane**
Hydrophile group-containing organopolysiloxanes
Organopolysiloxanes ayant des groupes hydrophiles

(30) Priorität: 10.09.1993 DE 4330735
(43) Veröffentlichungstag der Anmeldung: 03.05.1995
(73) Patentinhaber: Wacker-Chemie GmbH, 81737 München (DE)
(72) Erfinder: Stepp, Michael Dr., D-84489 Burghausen (DE)

(56) Entgegenhaltungen:
- WO-A-91/16371
- WO-A-92/19667
- WO-A-92/21724
- DE-A- 4 120 418

## Beschreibung

Die Erfindung betrifft hydrophile Gruppen aufweisende Organopolysiloxane, Verfahren zu deren Herstellung sowie deren Verwendung in bei Zutritt von Feuchtigkeit vernetzbaren Organopolysiloxanmassen.

Der Begriff Organopolysiloxane soll im Rahmen dieser Erfindung auch oligomere Siloxane mitumfassen.

Diorganopolysiloxane besitzen meist aufgrund ihrer geringen Polarität eine hydrophobe Oberfläche. Eine Erhöhung ihrer Hydrophilie ist in vielen Fällen, wie z.B. bei Dentalabformmassen auf Silicon-Basis zur Verbesserung der Wasserbenetzbarkeit, bei Dichtungsmassen zur Verbesserung der Überstreichbarkeit mit wäßrigen Dispersionsfarben, bei der Oberflächenbehandlung von Fasern bzw. Textilien zur Verbesserung des Griffs, von großer Bedeutung. Durch Einsatz von Organopolysiloxanen, die polare Gruppen aufweisen, läßt sich die Polarität und damit die Oberflächenenergie so verändern, daß die Hydrophilie des Siloxans verbessert wird. Als polare Gruppen werden dabei häufig aufgrund ihrer kommerziellen Verfügbarkeit, ihrer Neutralität und relativ hohen chemischen Beständigkeit Polyetherreste verwendet. Hierzu sei beispielsweise auf US-A 3,565,845 (Union Carbide Corp.) bzw die entsprechende DE-B 1 947 268 und US-A 4,657,959 (Minnesota Mining MFG CO.; ausgegeben am 14. April 1987) bzw. die entsprechende WO-A 87/03001 verwiesen.

In den Fällen, bei denen zur Erhöhung der Permanenz der hydrophilen Eigenschaften eine Vernetzbarkeit des hydrophilen Organopolysiloxans erwünscht wird, müssen im Siloxangerüst weitere, vernetzbare Gruppen vorhanden sein. Hierzu sei beispielsweise auf US-A 4,283,519 (Union Carbide Corp.; ausgegeben am 22. Juli 1981) bzw. die entsprechende EP-A 32310 und US-A 4,552,919 (Toray Silicone Company, Ltd; ausgegeben am 12. November 1985) verwiesen. Im allgemeinen haben solche Massen den Nachteil, daß die hydrolysierbaren Funktionen unter Zutritt von Feuchtigkeit nur bei erhöhter Temperatur und/oder in Gegenwart von Metallkatalysatoren vernetzen können.

Gegenstand der Erfindung sind Organopolysiloxane, die mindestens eine Einheit (A) der Formel 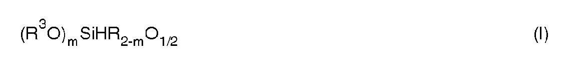 sowie
mindestens eine Einheit (B), ausgewählt aus der Gruppe von Einheiten bestehend aus 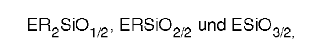 enthalten, worin
R gleich oder verschieden sein können und einwertige, SiC-gebundene, gegebenenfalls substituierte Kohlenwasserstoffreste mit 1 bis 12 Kohlenstoffatomen bedeuten,
R³ gleich oder verschieden sein können und einwertige, gegebenenfalls substituierte Kohlenwasserstoffreste bedeuten,
m 1 oder 2 ist und
E einen Rest der allgemeinen Formel 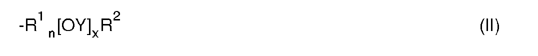
bedeutet, in der R¹ einen Alkylenrest mit 1 bis 6 Kohlenstoffatomen bedeutet, n 0 oder 1 ist, Y gleich oder verschieden sein kann und Alkylenreste mit 1 bis 4 Kohlenstoffatomen bedeutet, R² einen Alkoxyrest mit 1 bis 6 Kohlenstoffatomen oder einen Oxycarbonylalkylrest mit 1 bis 6 Kohlenstoffatomen bedeutet, und x eine ganze Zahl von 1 bis 200 ist.

Der Anteil an Siloxan-Einheiten (A) liegt vorzugsweise zwischen 0,2 und 67 %, besonders bevorzugt zwischen 1 und 10 %, jeweils bezogen auf die Gesamtzahl der im erfindungsgemäßen Organopolysiloxan vorhandenen Siloxan- Einheiten.

Der Anteil an Siloxan-Einheiten (B) liegt vorzugsweise zwischen 1 und 70 %, besonders bevorzugt zwischen 1 und 40 %, jeweils bezogen auf die Gesamtzahl der im erfindungsgemäßen Organopolysiloxan vorhandenen Siloxan- Einheiten.

Bevorzugt handelt es sich bei den erfindungsgemäßen, hydrophile Gruppen aufweisenden Organopolysiloxanen um solche der Formel (111) 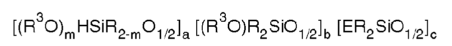 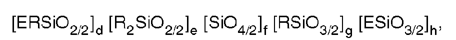 wobei R, E R³ und m die obengenannte Bedeutung haben und a einen Wert von 1 bis 8 hat, b und c jeweils unabhängig voneinander Werte von 0 bis 8 haben, d 0 bis 280, e 0 bis 396, f 0 bis 3, g 0 bis 6 und h 0 bis 3 ist, die Summe a+b+c 2 bis 8 beträgt, die Summe c+d+h einen Wert von 1 bis 280 hat, die Summe a+b+c+d+e+f+g+h 3 bis 400 beträgt und das Verhältnis der Summen a+b+e+f+g : c+d+h 100: 1 bis 1 : 1 beträgt.

Beispiele für Rest R sind Alkylreste, wie der Methyl-, Ethyl-, n-Propyl-, iso-Propyl-, n-Butyl-, iso-Butyl-, tert.-Butyl-, sek.-Butyl, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest und der 2-Ethylhexylrest, Nonylreste, wie der n-Nonylrest, Decylreste, wie der n-Decylrest, Dodecylreste, wie der n-Dodecylrest; Alkenylreste, wie der Vinyl-, Allyl-, 5-Hexen-1-yl-, E-4-Hexen-1-yl-, Z-4-Hexen-1-yl-, 2-(3-Cyclohexenyl)-ethyl- und Cyclodo- deca-4,8-dienylrest, Cycloalkylreste, wie Cyclopentyl-, Cyclohexyl-, Cycloheptylreste und Methylcyclohexylreste; Arylreste, wie der Phenyl- und der Naphthylrest; Alkarylreste, wie o-, m-, p-Tolylreste, Xylylreste und Ethylphenylreste; Aralkylreste, wie der Benzylrest, der a-und der β-Phenylethylrest sowie der 2-Phenyl-l-propylrest.

Beispiele für substituierte Kohlenwasserstoffreste R sind halogensubstituierte Kohlenwasserstoffreste mit 1 bis 12 Kohlenstoffatomen, wie beispielsweise mit Fluor-, Chlor-, Brom- und Jodatomen substituierte Alkylreste, wie der 3,3,3-Trifluor-n-propylrest, der2,2,2,2',2',2'-Hexafluorisopropylrest, der Heptafluorisopropylrest, und Halogenarylreste, wie der o- m-, und p-Chlorphenylrest, sowie thiolsubstituierte Kohlenwasserstoffreste mit 1 bis 12 Kohlenstoffatomen, wie -(CH₂)₃SH, -(CH₂)₆SH, -(CH₂)₄CH(SH)CH₃, 2-(3-Mercapto-l-cyclohexyl)-1-ethyl-, 2-(3,4-Dimercapto-l-cyclohexyl)-I-ethyl-, -(CH₂)₃0(CH₂)₃SH, -(CH2)₃OCH₂CH(SH)CH₂SH; -(CH₂)₃OCH₂CH(SH)CH₃, -(CH₂)₃OOCCH₂SH, -(CH₂)₃OOC(CH₂)₂SH, -(CH₂)₈SH, -(CH₂)₆CH(SH)CH₃, -(CH2)₇SH, -CH₂SH, -(CH₂)₂SH, -(CH₂)_{S}CH=CH(CH₂)_{S}SH, -(CH₂)₅CH=CH(CH₂)₃CH(SH)CH₃, -(CH₂)₅CH(SH)(CH₂)₄CH=CH₂, -(CH₂)₆CH(SH)(CH₂)₃CH=CH₂, -(CH₂)₆CH(SH) (CH₂)₃CH(SH)CH₃, -(CH₂)₅CH(SH)(CH₂)₄CH(SH)CH₃, -(CH₂)₅CH(SH)(CH₂)₆SH, -(CH₂)₆CH(SH)(CH₂)₆SH, 1-Mercapto-4-cyclododec-8-enyl-, 1-Mercapto-5-cyclododec-8-enyl-, 1,6-Dimercapto-10-cyclododecyl-, 1-Mercapto-2-cyclobutyl-, 1-Mercapto-3-cyclobutyl-, 1-Mercapto-2-cyclopentyl-, 1-Mercapto-3-cyclopentyl-, 1-Mercapto-2-cyclohexyl-, 1-Mercapto-3-cyclohexyl-, 1-Mercapto-4-cyclohexyl-, 1-Mercapto-2-cycloheptyl-, 1 Mercapto-3-cycloheptyl-, 1-Mercapto-4-cycloheptyl-, 1-Mercapto-2-cyclooctyl-, 1-Mercapto-3-cyclooctyl-, 1-Mercapto-4-cyclooctyl-, 1 Mercapto-5-cyclooctyl-, 1,2-Dimercapto-4-cyclohexyl-, 1-Mercaptocyclohex-3-en-3-yl-, 1-Mercaptocyclohex-3-en-4-yl-, 1-Mercapto- cyclohex-2-en-4-yl-, -(CH2)3SCH2CH(SH)CH2SH, -(CH2)3S(CH2)3SH, -OrthO-(CH₂)₃OC₆H₄SH, -meta-(CH₂)₃OC₆ H₄SH, -para-(CH₂)₃0C₆H₄SH, -ortho-(CH₂)₃OC₆H₄O(CH₂)₃SH, -meta-(CH₂)₃OC₆H₄O(CH₂)₃SH, -para-(CH₂)₃OC₆ H₄O(CH₂)₃SH, -ortho-(CH₂)₃C₆H₄SH, -meta-(CH₂)₃C₆H₄SH, -para-(CH₂)₃C₆H₄SH, -ortho-C₆H₄SH -meta-C₆H₄SH, -para-C₆H₄SH, -(CH₂)OOC(CH₂)₁₁SH und -(CH₂)₃OOC(CH₂)₉CH(SH)CH₃.

Bevorzugt handelt es sich bei Rest R um Methyl-, Phenyl-, Vinyl-, Allyl-, 5-Hexen-1-ylreste sowie lineare Thiolalkylreste, wie -(CH₂)₃SH, -(CH₂)₆SH und -(CH₂)₄CH(SH)CH₃, wobei Methylrest, Vinylrest und Rest -(CH₂)₃SH besonders bevorzugt sind.

Bevorzugt handelt es sich bei Rest R³ um einwertige Kohlenwasserstoffreste mit 1 bis 13 Kohlenstoffatomen, die durch Ethersauerstoffatome substituiert sein können.

Beispiele für Reste R³ sind die für Rest R angegebenen Beispiele für Alkyl- und Cycloalkylreste sowie -(CH₂)₂-OCH₃, -(CH₂)₂OCH₂CH₃ und -(CH₂)₂ OCH₃.

Bevorzugt handelt es sich bei Rest R³ um den Methyl-, Ethyl-, n-Propyl-, iso-Propyl-, n-Butyl- und den sek.-Butylrest, wobei der Ethylrest besonders bevorzugt ist.

Beispiele für Rest R¹ sind lineare oder verzweigte Alkylenreste, wie der Methylen-, Ethylen-, n-Propylen-, isoPropylen-; 1-n-Butylen-, 2-n-Butylen-, iso-Butylen-, tert.-Butylen-, n-Pentylen-, iso-Pentylen-, neo-Pentylen-, tert.-Pen- tylenrest und n-Hexylenrest.

Bevorzugt handelt es sich bei Rest R¹ um -CH₂-, -(CH₂)₂-, -(CH₂)₃- und -CH₂CH(CH₃)-_{;} wobei -(CH2)3- besonders bevorzugt ist.

Beispiele für Rest Y sind die für Rest R¹ angegebenen Beispiele für zweiwertige Alkylenreste mit 1 bis 4 Kohlenstoffatomen.

Bevorzugt handelt es sich bei Rest Y um -CH₂-, -(CH₂)₂-, -(CH₂)₃- und -CH₂CH(CH₃)-, wobei -(CH₂)₂- besonders bevorzugt ist.

Bei Rest R² gleich Alkoxyrest handelt es sich um über ein Sauerstoffatom gebundene lineare oder verzweigte Alkylreste mit 1 bis 6 Kohlenstoffatomen. Bei Rest R² gleich Oxycarbonylalkylreste handelt es sich um Carbonsäurereste mit einem linearen oder verzweigten Alkylrest. Beispiele für solche Alkylreste sind die für Rest R angegebenen Alkylreste mit 1 bis 6 Kohlenstoffatomen.

Bevorzugt handelt es sich bei Rest R² um Alkoxyreste, wie Methoxy-, Ethoxy-, n-Propoxy- und n-Butoxyrest, sowie um Oxycarbonylalkylreste, wie den HCOO-, H₃CCOO- und (H₃C)₂CHCOO-Rest; wobei Methoxy-, Ethoxy- und n-Butoxyrest sowie H,₃CCOO- besonders bevorzugt sind

Vorzugsweise ist m gleich 2.

Vorzugsweise handelt es sich bei x um ganze Zahlen zwischen 3 und 60, besonders bevorzugt zwischen 3 und 15.

Herstellungsbedingt können neben den in Formel (III) genannten Siloxaneinheiten in untergeordnetem Maß noch weitere Siloxaneinheiten, wie beispielsweise [(R³O)ₘ₋₁HSiR₂-ₘO_{2/2}] und [(R³O)₃SiO_{1/2}] mit R, R³ und m gleich der obengenannten Bedeutung, enthalten sein.

Vorzugsweise beträgt in Formel (III) das Verhältnis a+b+e+f+g : x-(c+d+h) 10 : 90 bis 99 : 1, besonders bevorzugt 20: 80 bis 90: 10.

Durch Variation der Verhältnisse der verschiedenen Siloxaneinheiten zueinander sowie der Art des Restes E der Formel (11) können auf einfache Weise die Eigenschaften der erfindungsgemäßen, hydrophile Gruppen aufweisenden Organopolysiloxane eingestellt werden. So verbessern in Formel (111) große Werte von e und kleine Werte von c, d, h und x deren Mischbarkeit mit Dialkylpolysiloxanen. Dagegen erhöhen kleine Werte von e und große Werte von c, d, h und x die Hydrophilie der erfindungsgemäßen Organopolysiloxane, wobei c, d, e, h und x die oben dafür angegebene Bedeutung haben.

Sollen die erfindungsgemäßen Organopolysiloxane in Anwesenheit von Feuchtigkeit vernetzen gelassen werden, werden vorteilhafterweise solche Siloxane der Formel (III) gewählt, deren Verhältnis a : b+c größer oder gleich 2 : 3, besonders bevorzugt größer oder gleich 3 : 2, ist.

Falls die erfindungsgemäßen Organopolysiloxane SiC-gebundene, thiolsubstituierte Kohlenwasserstoffreste und SiC-gebundene Reste mit aliphatischer Kohlenstoff-Kohlenstoff-Mehrfachbindung aufweisen, wird zusätzlich Vernetzbarkeit durch Bestrahlung mit elektromagnetischen Strahlen ermöglicht, wobei sogenannte Dual-Cure-Systeme erhalten werden. Hierzu sei beispielsweise auch auf WO 93/00405 (Wacker-Chemie GmbH; ausgegeben am 7. Januar 1993) verwiesen.

Um bei den erfindungsgemäßen Organopolysiloxanen eine ausreichende Photovernetzbarkeit zu gewährleisten, wird das Verhältnis von SiC-gebundenen, thiolsubstituierten Kohlenwasserstoffresten zu den SiC-gebundenen Resten mit aliphatischer Kohlenstoff-Kohlenstoff-Mehrfachbindung vorzugsweise zwischen 10 : 1 und 1 : 10, besonders bevorzugt zwischen 5 : 1 und 1 : 5, insbesondere zwischen 2 : 1 und 1 : 2, gewählt

Die erfindungsgemäßen, hydrophile Gruppen aufweisenden Organopolysiloxane haben ein Molekulargewicht von vorzugsweise 500 bis 100 000, besonders bevorzugt 1 500 bis 60 000.

Die erfindungsgemäßen, hydrophile Gruppen aufweisenden Organopolysiloxane haben den Vorteil, daß sie bei Zutritt von Feuchtigkeit rasch vernetzen. Des weiteren haben sie den Vorteil, daß sie ohne Zusatz von Metallkatalysatoren, wie zum Beispiel Zinn- und Titan katalysatoren, sehr gut vernetzen. Die Topfzeit kann dabei problemlos durch Zusatz entsprechender Brönsted-Säuren auf das gewünschte Maß eingestellt werden.

Die erfindungsgemäßen, hydrophile Gruppen aufweisenden Organopolysiloxane können nach in der Silicium-Chemie gängigen Methoden hergestellt werden. Danach können sie beispielsweise durch Umsetzung von sowohl mindestens eine endständige Hydroxylgruppe als auch mindestens eine Siloxan-Einheit (B) aufweisenden Organopolysiloxanen bzw. Organosilanen mit Hydrogenorganyloxysilanen nach der in der internationalen Anmeldung mit dem Aktenzeichen PCT/EP91/00795 (Wacker-Chemie GmbH, angemeldet am 25. April 1991) bzw. der entsprechenden US-Anmeldung mit der Seriennummer 07/938,212 beschriebenen Arbeitsweise hergestellt werden. Die Stöchiometrie der Reaktionsteilnehmer wird dabei so gewählt, daß im Reaktionsprodukt mindestens eine Siloxan-Einheit (A) vorliegt. Die sowohl mindestens eine endständige Hydroxylgruppe als auch mindestens eine Siloxan-Einheit (B) aufweisenden Organopolysiloxane können beispielsweise durch Cohydrolyse von Chlor-, Acyloxy- oder Alkoxysilanen vorzugsweise bei einem Druck von 900 bis 1100 hPa und einer Temperatur von 20 bis 180°C hergestellt werden. Hierzu sei beispielsweise auf W. Noll "Chemie und Technologie der Silicone", Verlag Chemie Weinheim, 2. Auflage, 1968, Seite 163ff verwiesen.

Vorzugsweise werden die erfindungsgemäßen Organopolysiloxane in einem 1. Schritt durch Mischhydrolyse oder Äquilibrierung und Mischkondensation eines Silans der Formel 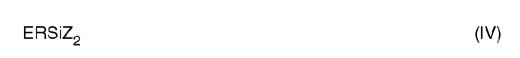 mit Verbindungen, ausgewählt aus der Gruppe bestehend aus Silanen der Formel 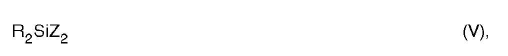 Organopolysiloxanen der Formel 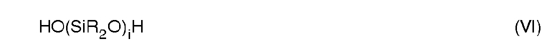 und cyclischen Siloxanen der Formel 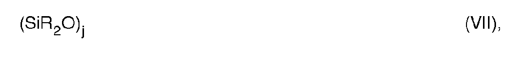 und anschließender Umsetzung der so erhaltenen, Hydroxylgruppen aufweisenden Organosiliciumverbindung in einem 2. Schritt mit Silan der Formel 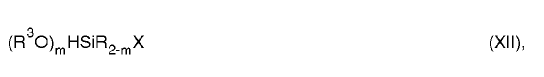 hergestellt, worin E, R, R³ und m die obengenannte Bedeutung hat, Z gleich oder verschieden sein kann und Hydroxylgruppe oder eine leicht hydrolysierbare Gruppe, wie Halogenatom, Alkoxyrest oder Oxycarbonylalkylrest, bedeutet, i eine ganze Zahl von 2 bis 2000 ist, j eine ganze Zahl von 3 bis 6 ist und X eine leicht abspaltbare Gruppe bedeutet, wie Halogenatom und Reste -OR³, -NR-C(=O)R, -OC(=O)R und -NR₂.

Falls erfindungsgemäße Organopolysiloxane der Formel (III) mit c>0 hergestellt werden sollen, werden zusätzlich Silane der Formel 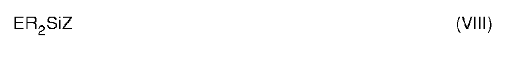 eingesetzt, wobei E, R und Z die obengenannte Bedeutung haben.

Falls erfindungsgemäße Organopolysiloxane der Formel (III) mit h>0 hergestellt werden sollen, werden zusätzlich Silane der Formel 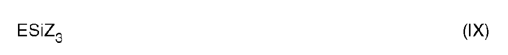 eingesetzt, wobei E und Z die obengenannte Bedeutung haben.

Falls erfindungsgemäße Organopolysiloxane der Formel (III) mit f>0 hergestellt werden sollen, werden zusätzlich Silane der Formel 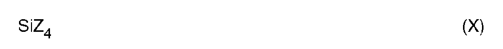 eingesetzt, wobei Z die obengenannte Bedeutung hat.

Falls erfindungsgemäße Organopolysiloxane der Formel (111) mit g>O hergestellt werden sollen, werden zusätzlich Silane der Formel 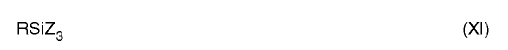 eingesetzt, wobei R und Z die obengenannte Bedeutung haben.

Bei dem erfindungsgemäßen Verfahren können die Silane der Formeln (IV), (V), (VIII), (IX), (X) und (XI) auch als Homo- oder Misch-Oligomere eingesetzt werden, die durch vollständige oder unvollständige Hydrolyse und Kondensation aus diesen entstehen, sowie Gemische aus Silanen der Formeln (IV), (V), (VIII), (IX), (X) und (XI) und deren Homo- oder Misch-Oligomere.

Beispiele für Rest Z sind Fluor-, Chlor-, Brom- und Jodatom sowie Methoxy-, Ethoxy-, n-Propoxy-, iso-Propoxy-, n-Butoxy-, sec-Butoxy-, iso-Butoxy-, 2-Methoxyethyl-, 2-Butoxyethyl-, Acetoxy- und Formyloxyreste, wobei es sich vorzugsweise um Chlor-, Methoxy-, Ethoxy-, iso-Propoxy- und Acetoxyreste handelt.

Bevorzugt handelt es sich bei X um Rest -OR³ mit R³ gleich der obengenannten Bedeutung

Bei dem erfindungsgemäßen Verfahren kann die Äquilibrierung in Gegenwart eines sauren Katalysators durchgeführt werden. Vorzugsweise handelt es sich bei dem sauren Katalysator um Phosphornitrilchloride, wie sie in US-A 3,839,388 (Wacker-Chemie; ausgegeben am 1. Oktober 1974) bzw. der entsprechenden DE-A 22 29 514 und US-A 5,008,229 (Wacker-Chemie; ausgegeben am 16. April 1991) bzw. der entsprechenden DE-A-39 03 137 beschrieben sind

Vorzugsweise werden bei dem erfindungsgemäßen Verfahren für die Äquilibrierung die Silane der Formeln (IV), (V), (VIII), (IX); (X) und (XI) so gewählt, daß mindestens 5 Molprozent aller Reste Z Halogenatom, besonders bevorzugt Chloratom, bedeutet.

Zur Stabilisierung der entstehenden Hydroxylgruppen erfolgt die anschließende Hydrolyse bzw Mischhydrolyse der Verbindungen (IV) bis (XI) vorzugsweise in Gegenwart von Base, wie zum Beispiel NaHCO₃, MgO; K₂CO₃, Na₂CO₃ und/oder Aminen, wie Ammoniak, Triethylamin oder Dibutylamin, die als solche oder in Form ihrer wäßrigen Lösungen eingesetzt werden können.

Der 1. Schritt des erfindungsgemäßen Verfahrens wird vorzugsweise bei einer Temperatur von 20 bis 120°C und einem Druck von 900 bis 1100 hPa durchgeführt.

Der 2. Schritt des erfindungsgemäßen Verfahrens wird vorzugsweise bei einer Temperatur von 80 bis 120°C und einem Druck von 900 bis 1100 hPa durchgeführt.

Herstellungsbedingt können neben den in Formel (III) genannten Siloxaneinheiten in untergeordnetem Maß noch weitere Siloxaneinheiten enthalten sein.

Des weiteren können die erfindungsgemäß hergestellten Organopolysiloxane auch im Gemisch mit Nebenbestandteilen aus den eingesetzten Silanen der Formel (IV), (VIII) und (IX), wie HR¹ₙ[OY]_{X}R² mit R¹, R², Y und x gleich der obengenannten Bedeutung, wie zum Beispiel H(OCH₂CH₂)₆-OCH₃ und H₃CCH₂CH₂-(OCH₂CH₂)₆-OCH₃, sowie Nebenbestandteilen, die bei der Umsetzung entstehen, wie Cyclosiloxane, vorhanden sein.

Beispiele für Silane der Formel (IV) sind H₃CSiCl₂-(CH₂)₃O(CH₂CH₂O)₅CH₃, H₃CSi(OCH₃)₂-(CH₂)₃O (CH₂CH₂O)₅CH₃, H₃CSi(OCH(CH₃)₂)₂-(CH₂)₃O(CH₂CH₂O)₅CH₃, H₃CSi(OCH(CH₃)₂)₂-(CH₂)₃O(CH₂CH₂O)₁₅CH₃, H₃CSi(OCH₂CH₃)₂-(CH₂)₃O(CH₂CH₂O)₄₄CH₃, H₃CSi(OCH₃)₂-(CH₂)₃O(CH₂CHCH₃O)₂₄(CH₂CH₂O)₂₄(CH₂)₃CH₃, H₃CSi(OCH₃)₂-(CH₂)₃O(CH₂CHCH₃O)₆₆(CH₂)₃CH₃, H₃CSiCl₂-O(CH₂CH₂O)₅CH₃, PhSiCl₂-(CH₂)₆O(CH₂CH₂O)₅ CH₃, H₃CSi(OCH₂CH₂CH₃)₂-(CH₂)₃O(CH₂CH₂O)CH₃, H₃CSiCl(OCH₂CH₃)-(CH₂)₃O(CH₂CH₂O)₃CH₃, H₃CS1(OCH (CH₃)₂)₂-(CH₂)₃O(CH₂CH₂CH₂CH₂O)₃₃(CH₂)₃CH_{3;} H₃CSi(OCH₃)₂-(CH₂)₃O(CH₂CH₂O)₁₅OCCH₃ und H₃CSi (OCH₃)₂-(CH₂)₃O(CH₂CH₂O)₄₄OCCH(CH₃)₂,
wobei
H₃CSiCl₂-(CH₂)₃O(CH₂CH₂O)₅CH₃, H₃CSi(OCH₃)₂-(CH₂)₃O(CH₂CH₂O)₅CH₃ und H₃CSi(OCH(CH₃)₂)₂-(CH₂)₃O (CH₂CH₂0)ₛCH₃ bevorzugt eingesetzt werden.

Beispiele für Silane der Formel (V) sind (H₃C)₂SiCl₂, H₂C=CH-Si(CH₃)Cl₂, Ph₂SiCl₂, Ph(H₃C)SiCl₂, H2C=CH-(CH₂)₄-Si(CH₃)Cl₂, (H₂C=CH) PhSiCl₂, (F₃CCH₂CH₂)(H₃C)SiCl₂; (F₃CCH₂CH₂)(H₃C)Si(OCH₃)₂, (F₃CCH₂CH₂)(H₃C)Si(OCH₃) Cl, 2-(3-Cyclohexenyl)-ethyl-Si(CH₃)Cl₂, (H₃C)₂Si(OCH₃)₂, H₂C=CH-Si(CH₃)(OCH₃)₂, Ph₂Si(OCH₃)₂, Ph(H₃C)Si (OCH₃)₂, H₂C=CH-(CH₂)₄-Si(CH₃)(OCH₃)₂, (H₂C=CH)PhSi(OCH₃)₂, 2-(3-Cyclohexenyl)-ethyl-Si(CH₃)(OCH₃)₂, HS-CH₂-Si(CH₃)(OCH₃)₂, HS-(CH₂)₃-Si(CH₃)(OCH₃)₂, (H₃C)₂Si(OCH₂CH₃)₂, H₂C=CH-Si(CH₃)(OCH₂CH₃)₂, H₂C=CH-Si (CH₃)(OOCCH₃)₂, (H₃C)₂Si(OOCCH₃)₂, Ph₂Si(OCH₂CH₃)₂, Ph(H₃C)Si(OCH₂CH₃)₂ und H₃CCH=CH-(CH₂)₃-Si(CH₃) (OCH₂CH₃)₂ mit Ph gleich Phenylrest, wobei (H₃C)₂SiCl₂, H₂C=CH-Si(CH₃)CI₂ und HS-(CH2)3-Si(CH3)(OCH3)2 bevorzugt sind.

Beispiele für Siloxane der Formel (VI) sind HO[Si(CH₃)₂O]₂H, HO[Si(CH₃)₂O]₁₅H, HO[Si(CH₃)₂O]₃₅H, HO[Si (CH₃)₂O]₆₅H, HO[Si(CH₃)₂O]₁₀₈H, HO[Si(CH₃)₂O]₂₂₀H, HO[Si(CH₃)₂O]₆₄₄H_{:} HO[Si(CH₃)₂O]₉₂₀H, HO[Si(CH₃)₂ O]₁₄₅₀H, HO[Si(CH₃)₂O]₄₄[Si(CH=CH₂)CH₃O]_{»}H, HO[Si(CH=CH₂)CH₃O]₅₇H, HO[Si(CH₃)₂O]₅₈[Si(Ph)CH₃O]₄H, HO [Si(CH₃)₂O]₁₁₈[Si(Ph)₂O]₁₄H, HO[Si(CH₃)(CH₂CH₂CF₃)O]₄H, HO[Si(CH₃)(CH₂CH₂CF₃)O]₂₃H, HO[Si(CH₃)(CH₂ CH₂CF₃)O]₈₃H, HO[Si(CH₃)(CH₂CH₂CF₃)O]₁₀₂H und HO[Si(CH₃)₂O]₇₄[Si(CH=CH₂)CH₃O]₄[HS-(CH₂)₃-Si(CH₃)O]₂H mit Ph gleich Phenylrest, wobei HO[Si(CH₃)₂O]₃₅H, HO[Si(CH₃)₂O]₂₂₀H, HO[Si(CH₃)₂O]₆₄₄H und HO[Si(CH₃)₂O]₄₄[Si (CH=CH₂)CH₃O]₁₁ H bevorzugt sind.

Beispiele für Siloxane der Formel (VII) sind [Si(CH₃)₂O]_{3;} [Si(CH₃)₂O]₄, [Si(CH₃)₂O]₅, [Si(CH₃)₂O]₆, [Si(CH₃)PhO]₃, [Si(CH₃)PhO]_{4;} [Si(CH₃)PhO]ₛ, [Si(CH₃)PhO]₆, [SiPh₂O]₃, [SiPh₂O]₄, [SiPh₂O]ₛ, [SiPh₂O]₆, [Si(CH₃)(CH₂CH₂CF₃)O]₃, [Si(CH₃)(CH₂CH₂CF₃)O]₄, [Si(CH₃)(CH₂CH₂CF₃)O]₅, [Si(CH₃)(CH₂CH₂CF₃)O]₆, [Si(CH₃)(CH=CH₂)O]₃, [Si(CH₃) (CH=CH₂)O]₄, [Si(CH₃)(CH=CH₂)O]₅ und [Si(CH₃)(CH=CH₂)O]₆ mit Ph gleich Phenylrest, wobei [Si(CH₃)₂O]₃, [Si (CH₃)₂O]4, [Si(CH₃)₂0]ₛ, [Si(CH₃)(CH₂CH₂CF₃)O]₃ und [Si(CH₃)(CH=CH₂)O]₄ bevorzugt sind.

Beispiele für Silane der Formel (VIII) sind (H₃C)₂SiOH-(CH₂)₃O(CH₂CH₂O)₅CH₃, (H₃C)₂SiCl-(CH₂)₃O (CH₂CH₂0)ₛCH₃, (H₃C)₂Si(OCH₃)-(CH₂)₃O(CH₂CH₂O)₅CH₃, (H₃C)₂Si(OCH(CH₃)₂)-(CH₂)₃O(CH₂CH₂O)₁₅CH₃, (H₃C)₂SiCl-(CH₂)₃O(CH₂CH₂O)₄₄CH₃, (H₃C)₂Si(OCH₃)-(CH₂)₃O(CH₂CHCH₃O)₂₄(CH₂CH₂O)_{4$}(CH₂)₃CH₃, (H₃C)₂Si (OCH₃)-(CH₂)₃O(CH₂CHCH₃O)₆₆(CH₂)₃CH₃, (H₃C)₂SiCl-O(CH₂CH₂O)ₛCH₃, Ph(H₃C)SiCI-(CH₂)₆O(CH₂CH₂O)₅ CH₃, (H₃C)₂Si(OCH₂CH₂CH₃)-(CH₂)₃O(CH₂CH₂O)₇CH₃ und (H₃C)₂SiCl-(CH₂)₃O(CH₂CH₂CH₂CH₂O)₃₃(CH₂)₃CH₃ mit Ph gleich Phenylrest, wobei (H₃C)₂SiCl-(CH₂)₃O(CH₂CH₂O)₅CH₃, (H₃C)₂Si(OCH(CH₃)₂)-(CH₂)₃O(CH₂CH₂ O)₁₅CH₃ und (H₃C)₂Si(OCH₃)-(CH₂)₃O(CH₂CHCH₃O)₆₆(CH₂)₃CH₃ bevorzugt sind.

Beispiele für Silane der Formel (IX) sind: SiCl₃-(CH₂)₃O(CH₂CH₂O)₅CH₃, Si(OCH₃)₃-(CH₂)₃O(CH₂CH₂O)₅CH₃, Si(OCH(CH₃)₂)₃-(CH₂)₃O(CH₂CH₂O)₅CH₃, Si(OCH(CH₃)₂)₃-(CH₂)₃O(CH₂CH₂O)₁₅CH₃, Si(OCH₂CH₃)₃-(CH₂)₃O (CH₂CH₂O)₄₄CH₃, Si(OCH₃)₃-(CH₂)₃O(CH₂CHCH₃O)₂₄(CH₂CH₂O)₄₈(CH₂)₃CH₃, Si(OCH₃)3₋(CH₂)₃O(CH₂CHCH₃ O)₆₆(CH₂)₃CH₃, SiCl₃-O(CH₂CH₂O)₅CH₃, Si(OCH₂CH₂CH₃)₃-(CH₂)₃O(CH₂CH₂O)₇CH₃, SiCl₂(OCH₂CH₃)-(CH₂)₃O (CH₂CH₂0)₃CH₃, SiCl₃-(CH₂)₃O(CH₂CH₂CH₂CH₂O)₃₃(CH₂)₃CH₃, Si(OCH₃)₃-(CH₂)₃O(CH₂CH₂O)₁₅OCCH₃ und Si (OCH₃)₃-(CH₂)₃O(CH₂CH₂O)₄₄OCCH(CH₃)₂, wobei SiCl₃-(CH₂)₃O(CH₂CH₂O)₅CH₃ und Si(OCH₂CH₃)₃-(CH₂)₃O (CH₂CH₂0)₄₄CH₃ bevorzugt sind.

Beispiele für Silane der Formel (X) sind SiCl₄, Si(OCH₃)₄, Si(OCH₂CH₃)₄, Si(OCH(CH₃)₂)₄, Si(OCH₂CH₂CH₃)₄, Cl₂Si(OCH₃)₂, ClSi(OCH₂CH₃)₃, Si(OOCCH₃)₄ und (H₃CCOO)Si(OCH₂CH₃)₃, wobei SiCl₄ und Si(OCH₂CH₃)₄ bevorzugt sind.

Beispiele für Silane der Formel (XI) sind H₃CSiCl₃, H₃CSi(OCH₃)₃, H₃CSi(OCH(CH₃)₂)₃, H₃CSi(OOCCH₃)₃, H₃CSi (OCH₂CH₃)₃, H₂C=CH-SiCl₃, H₂C=CH-Si(OCH₂CH₃)₃, H₂C=CH-Si(OOCCH₃)₃, F₃CCH₂CH₂-SiCl₃, F₃CCH₂CH₂-Si (OCH₂CH₃)₃, PhSiCl₃, PhSi(OCH₃)₃, HS-(CH₂)₃-Si(OCH₃)₃ und HS-CH₂-Si(OCH₃)₃ mit Ph gleich Phenylrest, wobei H₃CSiCl₃, H₃CSi(OOCCH₃)₃, H₃CSi(OCH₂CH₃)₃ und HS-(CH₂)₃-Si(OCH₃)₃ bevorzugt sind.

Beispiele für Silane der Formel (XII) sind H-Si(OCH₃)₃, H-Si(OCH₃)₂CH₃, H-Si(OCH₃)₂Cl, H-Si(OCH₃)₂N(CH₃)₂, H-Si(OCH₂CH₃)₃, H-Si(OCH₂CH₃)₂CH₃, H-Si(OCH₂CH₃)₂Cl, H-Si(OCH₂CH₃)₂N(CH₃)₂, H-Si(OCH(CH₃)₂)₃, H-Si (OCH₃)(OCH(CH₃)₂), H-Si(OCH₂CH₂CH₃)₃ und H-Si(OCH₂CH₂CH₂CH₃)₂(OCH₃), wobei H-Si(OCH₂CH₃)₃ und H-Si (OCH(CH₃)₂)₃ bevorzugt sind.

Beispiele für die erfindungsgemäßen Organopolysiloxane der Formel (III) sind solche mit der durchschnittlichen Formel
[HSi(OEt)₂O_{½}]_{1,4}[EtOSiMe₂O_{½}]_{0,6} [MeSi[(CH₂)₃-O(CH₂CH₂O)_{4,8}Me]O_{2/2}]₂O[SiMe₂O_{2/2}]_{53,3} [SiO_{4/2}]_{0,5}
[HSi(OEt)₂O_{½}]3,i[MeSi[(CH2)3-O(CH2CH20)i4,$Me]02,2]i2 [SiMe₂O_{2/2}]_{43,5}[MeSiO_{3/2} ]_{1,5}
[HSiMe(OMe)O_{1/½}]_{3,6} [MeSi[(CH₂)₃-O(CH₂CHCH₃O)₂₄(CH₂CH₂O)₄₈Me]O_{2/2}]₁₂ [(F₃CCH₂CH₂)SiMeO_{2/2]235} [PhSiO_{3,2}]_{2,5}
[HSi(OEt)₂O_{½}]_{1,57}[EtOSiMe₂O_{½}]_{0.43} [MeSi[(CH2)3-O(CH2CH20)5,3Me]02;2]9,6[SiMe20v2]35,a
[HSi(OEt)₂O_{½}]_{1,58}[EtOSiMe₂O_{½}]_{0,42} [MeSi[(CH₂)₃-O(CH₂CH₂O)_{5,2}Me]O_{2/2}]₈[SiMe₂O_{2/2}]₁₁₀
[HSi(OEt)₂O_{½}]_{1,78}[Me₃SiO_{½}]_{0,22} [MeSi[(CH₂)₆-O(CH₂CH₂O)₅CH₃]O_{2/2}]₃₄[SiMe₂O_{2/2}]₃₃₂
[HSi(OEt)₂O_{½}]_{3,9}[Me₂Si[(CH₂)₃-O(CH₂CH₂O)_{15,8}Me]O_{½}]_{0,2} [SiMe₂O_{2,2}]₃₂[SiMeViO_{2/2}]₆[MeSiO_{3/2}]_{2,5}
[HSi(OIPr)₂O_{½}]_{2,9}[Si[(CH₂)₃-O(CH₂CH₂O)_{5,3}Me]O_{3/2}]_{1,2} [SiMe₂O_{2/2}]₂₄
[HSi(OEt)₂O_{½}]_{1,7}[EtOSiMe₂O_{½}]_{0,3} [MeSi[(CH₂)₃-O(CH₂CH₂O)_{4,8}Me]O_{2/2}]₁₂[SiMe₂O_{2/2}]_{130,3} [SiMeViO_{2/2}]₆[Si-Me[(CH₂)₃-SH]O_{2/2}]_{3,7}
[HSi(OiPr)₂O_{½}]_{1,8}[iPrOSiMe₂O½]_{0,2} [MeSi[(CH₂)₃-O(CH₂CHCH₃O)₆₆(CH₂)₃CH₃]O_{2/2}]₁₂[SiMe₂O_{2/2}]₂₂₁[SiMeViO_{2/2}]₆₆ [SiMe[(CH₂)₃-SH]O_{2/2}]_{32,7}
[HSi(OIPr)₂O_{½}]_{2,8}[MeSi[(CH₂)₃-O(CH₂CH₂O)₁₅(CH₃]O_{2/2}]₄ [SiiMe₂O_{2/2}]₁₇[Ph(H₃C)SiO_{2/2}]₄ [H₂C=CH-(CH₂)₄- siMeO_{2/2}]₆[HS-CH₂-SiO_{3/2}]_{2,9}
[HSi(OEt)₂O_{½}]_{3,8} [MeSi[(CH₂)₃-O(CH₂CH₂O)₄₄OCCH(CH₃)₂]O_{2/2}]₈ [SiMe₂O_{2/2}]₁₁₃[2-(3-Cyclohexenyl)-ethyl-SiMeO_{2/2}]_{4,2} [Si[(CH₂)₃-SH]O_{3/2}]_{0.7}[SiO_{4/2}]₁.

und
[HSi(OEt)₂O_{½}]_{1,2}[Me₂SiViO_{½}]_{0,8} [MeSi[(CH₂)₃-O(CH₂CH₂O)₃OCH₃]O_{2/}2]₈ [SiMe₂O_{2/2}]₂₆[Si[(CH₂)₃-SH]O_{3/2}]_{0,7} mit Me gleich Methylrest Et gleich Ethylrest, Ph gleich Phenylrest und Vi gleich Vinylrest, wobei
[HSi(OEt)₂O_{½}]_{1,4}[EtOSiMe₂O_{½}]_{0,6} [MeSi[(CH₂)₃-O(CH₂CH₂O)_{4,8}Me]O_{2/2}]₂₀[SiMe₂O_{2/2}]_{53,3} [SiO_{4/2}]_{0,5}
[HSi(OEt)₂O_{½}]_{3,1}[MeSi[(CH₂)₃-O(CH₂CH₂O)_{14,8}Me]O_{2/2}]₁₂ [SiMe₂O_{2/2}]_{43,5}[MeSiO_{3/2}]_{1,5}
[HSi(OEt)₂O_{½}]_{1,57}[EtOSiMe₂O_{½}]_{0,43} [MeSi[(CH₂)₃-O(CH₂CH₂O)_{5,3}Me]O_{2/2}]_{9,6}[SiMe₂O_{2/2}]_{35,4} und
[HSi(OEt)₂O_{½}]_{1,7}[EtOSiMe₂O_{½}]_{0,3} [MeSi[(CH₂)₃-O(CH₂CH₂O)_{4,8}Me]O_{2/2}]₁₂[SiMe₂O_{2/2}]_{130,3} [SiMeViO_{2/2}]₆[Si-Me[(CH₂)₃-SH]O_{2/2}]_{3,7}

bevorzugt sind.

Das erfindungsgemäße Verfahren hat den Vorteil, daß die erfindungsgemäßen, hydrophile Gruppen aufweisenden Organopolysiloxane auf sehr einfache Weise aus technisch gut verfügbaren Materialien hergestellt werden können. Dabei ist die Herstellung einer Vielzahl unterschiedlicher Produkte mit einem ganz gezielten Eigenschaftsprofil möglich.

Des weiteren hat das erfindungsgemäße Verfahren den Vorteil, daß kein organisches Lösungsmittel verwendet werden muß.

Die erfindungsgemäßen, hydrophile Gruppen aufweisenden Organopolysiloxane können nun auf bekannte Art und Weise durch Zutritt von Feuchtigkeit vernetzen gelassen werden, wobei die Feuchtigkeitsvernetzung durch Zusatz von Carbonsäuren, wie Ölsäure oder 2-Ethylhexansäure, beschleunigt werden kann. Falls die erfindungsgemäßen, hydrophile Gruppen aufweisenden Organopolysiloxane photovernetzbare Gruppen, wie Vinylgruppen- oder Thiolgruppen, aufweisen, können diese auch auf bekannte Weise mittels energiereicher Strahlung vernetzt werden, wobei die Strahlenvernetzung durch Zusatz geeigneter Photoinitiatoren beschleunigt werden kann. Sowohl in Bezug auf die Feuchtigkeitsvernetzung als auch auf die Strahlungsvernetzung sei hierzu beispielsweise auf die oben erwähnte WO 93/00405 verwiesen.

Die erfindungsgemäßen, hydrophile Gruppen aufweisenden Organopoylsiloxane können überall dort eingesetzt werden, wo eine dauerhafte Hydrophilie erwünscht ist, insbesondere dort, wo die Hydrophobie feuchtigkeitsvernetzbarer Silicone bisher einer Anwendung entgegenstand und die Vorteile der raschen, schonend katalysierten Feuchtigkeitsvernetzung zum Tragen kommen, wie z. B.
- als Bestandteil von Beschichtungsmaterialien für Textilien, Holz, Glas Beton, Stein, Papier, Pappen, Kork, Keramik, Kunststoff-Folien wie PVC-Folien, Polyesterfolien, PE-Folien, Metallgegenstände und Vlies-Stoffe;
- als Bestandteil von Grundierungen zur Verbesserung der Wasserbenetzbarkeit oder Haftung von RTV-2-Additi- ons-, RTV-2-Kondensations- oder RTV-I-Kondensations-Silicon-Kautschuk, z. B um die Überstreichbarkeit der Vulkanisate mit wasserhaltigen Farbdispersionen zu ermöglichen, oder als Soil-Release-Additiv;
- als Bestandteil von RTV-2-Additions-, RTV-2-Kondensations- oder RTV-I-Kondensations-Silicon-Kautschuk-Massen zur Verbesserung der Wasserbenetzbarkeit, z. B. bei Abformmassen (einvernetzbarer Hydrophilmodifier);
- als Bestandteil elektrisch leitfähiger Mischungen, z B. in Trockenbatterien;
- als Bestandteil von Implantaten zur Verbesserung der Gewebeverträglichkeit oder in Drug-Release-Implantaten bzw. anderen Wirkstoff-freisetzenden Abmischungen (Fungizide, Bakterizide etc.) zur Verbesserung der kontrollierten Wirkstoff-Freisetzung;
als Bestandteil von Antifogging- und Enteisungsbeschichtungen, z. B. für Fahr- und Flugzeugscheiben, oder von Antifouling-Beschichtungen für Schiffsrümpfe und
als Entgasungsadditiv oder Phasenvermittler in Lacken.

Weisen die erfindungsgemäßen Organopolysiloxane sowohl feuchtigkeitsvernetzbare wie auch strahlungsvernetzbare Gruppen auf, können diese des weiteren auch in den in der oben genannten WO 93/00405 angegebenen Anwendungsgebieten eingesetzt werden.

In den nachstehend beschriebenen Beispielen beziehen sich alle Angaben von Teilen und Prozentsätzen, falls nicht anders angegeben, auf das Gewicht. Sofern nicht anders angegeben, werden die nachstehenden Beispiele bei einem Druck der umgebenden Atmosphäre, also etwa bei 1000 hPa, und bei Raumtemperatur also bei etwa 23°C, bzw. bei einer Temperatur, die sich beim Zusammengeben der Reaktanden bei Raumtemperatur ohne zusätzliche Heizung oder Kühlung einstellt, durchgeführt. Die relative Luftfeuchtigkeit liegt dabei, falls nichts anderes angegeben ist, zwischen 60 und 80 %.

Im folgenden beziehen sich alle Viskositätsangaben auf eine Temperatur von 25°C.

Im folgenden bedeutet
Me Methylrest
Et Ethylrest
Vi Vinylrest
iPr iso-Propylrest.

### Beispiel 1

### a) Silansynthese:

Eine Mischung aus 1000 g eines Polyglycolethers der mittleren Formel H₂C=CHCH₂(OC₂H₄)₄OMe (käuflich erhältlich unter der Bezeichnung "Polyglycol AM 250" bei der Hoechst AG) und 14,6 g einer 1 %igen Lösung von Bis (1,1,3,3-tetramethyl-1,3-divinyldisiloxan)platin-Komplex in Hexan (=₁00 ppm Pt) wird mit 460 g Dichlormethylsilan bei 70°C zur Reaktion gebracht. Nach Abdestillieren der flüchtigen Bestandteile bei 50°C/4 hPa verbleiben 1326 g eines gelblichen Öls als Rückstand, das mit 1440 g Isopropanol umgesetzt wurde. Destillation bis 200°C/2 hPa liefert 646 g einer gelblichen Flüssigkeit der mittleren Formel
MeSi(OiPr)₂-(CH₂CH₂O)_{4,8}Me.

100 g eines OH-endständigen Polydimethylsiloxans mit einer Kettenlänge von ca. 220 Me₂SiO-Einheiten (Viskosität= 1 Pa.s; käuflich erhältlich bei der Wacker-Chemie GmbH) und 2,5 g SiCI₄ werden bei Raumtemperatur mit 0,14 g Phosphornitrilchlorid ("PNC1₂") versetzt und unter Rühren auf 100°C aufgeheizt. Binnen einer Stunde werden 93 g MeSi(OiPr)₂-(CH₂CH₂O)_{4,8}Me, dessen Herstellung oben unter a) beschrieben ist, bei 100°C zudosiert. Nach Zugabe von weiteren 0,14 g PNCl₂ wird eine weitere Stunde bei 100°C gerührt. Anschließend wird mit 45 ml Wasser hydrolysiert. Flüchtige Bestandteile werden bei 130°C/2 hPa abdestilliert. Nach Abkühlung auf 110°C versetzt man die Reaktionsmischung mit 1 g BHT (= 2,6-Di-t-butyl-p-methylphenol) und 30 g Triethoxysilan und läßt eine Stunde am Rückfluß kochen bevor überschüssiges Silan bei 120°C/3 hPa abdestilliert wird. Als Rückstand verbleiben 125 g eines klaren Öles mit einer Viskosität von 90 mm2/s, dem nach ²⁹Si- und ¹H-NMR-Spektrum folgende mittlere Formel zugeordnet werden kann:
[HSi(OEt)₂O_{½}]_{1,4}[EtOSiMe₂O_{½}]_{0,6} LMeSi((CH₂)₃-O(CH₂CH₂O)_{4,8}Me)O_{2/2}]₂₀[SiMe₂O_{2/2}]_{53,3} [SiO_{4/2}]_{0,5}

### Beispiel 2

315 g eines OH-endständigen Polydimethylsiloxans mit einer Kettenlänge von ca. 420 Me₂SiO-Einheiten (Viskosität 6 Pa.s; käuflich erhältlich bei der Wacker-Chemie GmbH), 60,4 g eines OH-endständigen Polysiloxans der mittleren Formel HO(SiMe2O_{2/2})_{9,6}(SiMeVi_{2/2})_{2,4}H (käuflich erhältlich bei der Wacker-Chemie GmbH) und 0,21 g BHT (= 2,6-Di-t-butyl-p-methylphenol) werden bei 90°C mit 23,6 g Dichlormethylvinylsilan und 0,09 g PNCI₂ versetzt. Binnen 45 Minuten werden 28,9 g Silan der Formel Me(MeO)₂Si-(CH₂)₃-SH zudosiert. Nach wiederholter Zugabe von 0,09 g PNCI₂ werden innerhalb einer Stunde 200 g MeSi(OiPr)₂-(CH₂)₃-O(CH₂CH₂O)_{4,8}Me, dessen Herstellung in Beispiel 1 unter a) beschrieben ist, bei 90°C zudosiert. Man rührt eine Stunde bei 100°C. Anschließend wird mit einer Lösung von 15 g Natriumhydrogencarbonat in 200 ml Wasser hydrolysiert. Flüchtige Bestandteile werden bei 130°C/I hPa abdestilliert. Nach Abkühlung auf Raumtemperatur versetzt man die Reaktionsmischung mit 2 g BHT (=2,6-Di-t-butyl-p-methylphenol) und 103 g Triethoxysilan und läßt eine Stunde am Rückfluß kochen, bevor überschüssiges Silan bei 120"C/1 hPa abdestilliert wird. Nach Filtration des Rückstands erhält man 427 g eines klaren, gelblichen öles mit einer Viskosität von 330 mm²/s, dem nach ²⁹Si- und H-NMR-Spektrum folgende mittlere Formel zugeordnet werden kann: [HSi(OEt)₂O_{½}]_{1,7}[EtOSIMe₂O_{½}]_{0,3} [MeSi{(CH₂)₃-O(CH₂CH₂O)_{4,8}Me}O_{2/2}]₁₂[SiMe₂O_{2/2}]_{130,3} [SiMeViO_{2/2}]₆[SiMe (CH₂)₃-^{SH} O_{2/2}]_{3.7}

### Beispiel 3

10 g des erfindungsgemäßen Siloxans aus Beispiel 1 werden mit einem Rakel auf eine Glasplatte aufgetragen, wobei die Schichtdicke ca. 0,1 mm beträgt. Eine Probe des so beschichteten Substrats besitzt in Anwesenheit von Luft eine Hautbildungszeit von 15 Minuten.

### Beispiel 4

10 des erfindungsgemäßen Siloxanes aus Beispiel 2 werden mit 0,1 g Ölsäure und 0,4 g 2-Methyl-1-phenyl-propan-2-ol-1-on (käuflich erhältlich unter der Bezeichnung Darocure 1173 bei Merck, D-Darmstadt) gut vermischt. Die so erhaltene Mischung wird mit einem Rakel auf eine Glasplatte aufgetragen, wobei die Schichtdicke ca. 0,1 mm beträgt. Eine Probe besitzt unter Lichtausschluß an Luft eine Hautbildungszeit von 20 Minuten.

Eine andere Probe des so beschichteten Substrats wird in Anwesenheit von Luft bestrahlt, wobei die Beschichtung nach 10 Sekunden Ultraviolettbestrahlung mit einer Leistung von 80 Watt/cm Leuchtlänge und Leistungsmaxima bei einer Wellenlänge von 313 nm und 361 nm in einem Abstand von 15 cm zu der zu vernetzenden Oberfläche (UV-Labortrockner Type 22/3 der Fa. Bentron GmbH, D-Rödermark) mit trockener Oberfläche aushärtet. Auf die so erhaltene, beschichtete Glasplatte wird mit der Pipette ein Tropfen demineralisiertes Wasser aufgetragen. Nach 30 Sekunden hat sich der Durchmesser der benetzten Fläche verdoppelt.

### Vergleichsbeispiel 1 (Wasserbenetzbarkeit)

2400 g a,w-Dihydroxydiorganopolysiloxan, welches als Diorganosiloxyeinheiten durchschnittlich 60 Dimethylsiloxyeinheiten, 4 Vinylmethylsiloxyeinheiten und 2 HS(CH₂)₃SiCH₃O_{2/2}-Einheiten aufweist und eine Viskosität von etwa 100 mPa.s hat, 328 g Hydrogentriethoxysilan und 13,6 g Pentandion werden unter Ausschluß von Feuchtigkeit gut vermischt, auf 100°C erwärmt, eine Stunde bei 100°C gerührt und durch kurzes Evakuieren (15 Minuten / 1 mbar) die flüchtigen Bestandteile entfernt. Anschließend wird über Cellulose filtriert.

Es werden 2513 g eines klaren, farblosen Öles mit einer Viskosität von 118 mPa-s erhalten, das nach ²⁹Si-NMR-Spektroskopie bezogen auf die Anzahl aller Endgruppen 93% H-Si(OEt)₂-Endgruppen aufweist.

100 Teile dieses Siloxans werden mit 1 Teil Ölsäure und 0,2 Teilen 2-Methyl-1-phenyl-propan-2-₀1-1-on (käuflich erhältlich unter der Bezeichnung Darocure 1173 bei Merck, D-Darmstadt) gut vermischt. Die so erhaltene Mischung, welche ein klares, farbloses Öl mit einer Viskosität von 116 mPa.s darstellt, wird mit einem Rakel auf eine Glasplatte aufgetragen, wobei die Schichtdicke circa 0,1 mm beträgt. Eine Probe des so beschichteten Substrats wird in Anwesenheit von Luft bestrahlt, wobei die Beschichtung nach 10 Sekunden Ultraviolettbestrahlung mit einer Leistung von 80 Watt/cm Leuchtlänge und Leistungsmaxima bei einer Wellenlänge von 313 nm und 361 nm in einem Abstand von 15 cm zu der zu vernetzenden Oberfläche (UV-Labortrockner Type 22/3 der Fa. Bentron GmbH, D-Rödermark) mit trockener Oberfläche aushärtet.

Auf die so erhaltene, beschichtete Glasplatte wird mit der Pipette ein Tropfen demineralisiertes Wasser aufgetragen. Nach 30 Minuten sind Form und Benetzungsfläche des Wassertropfens unverändert.

## Patentansprüche

1. Organopolysiloxane, die mindestens eine Einheit (A) der Formel 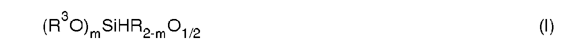 sowie
mindestens eine Einheit (B), ausgewählt aus der Gruppe von Einheiten bestehend aus 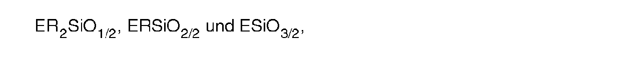 enthalten, worin
R gleich oder verschieden sein können und einwertige, SiC-gebundene, gegebenenfalls substituierte Kohlenwasserstoffreste mit 1 bis 12 Kohlenstoffatomen bedeuten,
R³ gleich oder verschieden sein können und einwertige, gegebenenfalls substituierte Kohlenwasserstoffreste bedeuten,
m 1 oder 2 ist und
E einen Rest der allgemeinen Formel 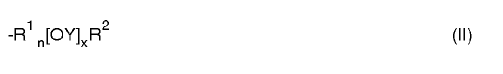
bedeutet, in der R¹ einen Alkylenrest mit 1 bis 6 Kohlenstoffatomen bedeutet, n 0 oder 1 ist, Y gleich oder verschieden sein kann und Alkylenreste mit 1 bis 4 Kohlenstoffatomen bedeutet, R² einen Alkoxyrest mit 1 bis 6 Kohlenstoffatomen oder einen Oxycarbonylalkylrest mit 1 bis 6 Kohlenstoffatomen bedeutet, und x eine ganze Zahl von 1 bis 200 ist.

2. Organopolysiloxane nach Anspruch 1, dadurch gekennzeichnet, daß Anteil an Siloxan-Einheiten (A) zwischen 0,2 und 67 % liegt, bezogen auf die Gesamtzahl der im Organopolysiloxan vorhandenen Siloxan-Einheiten.

3. Organopolysiloxane, nach Anspruch 1 oder 2, dadurch gekennzeichnet, daß der Anteil an Siloxan-Einheiten (B) zwischen 1 und 70 % liegt, bezogen auf die Gesamtzahl der im erfindungsgemäßen Organopolysiloxan vorhandenen Siloxan-Einheiten.

4. Organopolysiloxane gemäß einem oder mehreren der Ansprüche 1 bis 3, dadurch gekennzeichnet, daß es solche der Formel (111) 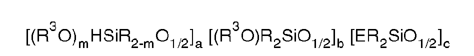 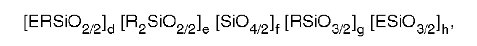 sind, wobei R, E, R³ und m die obengenannte Bedeutung haben und a einen Wert von 1 bis 8 hat, b und c jeweils unabhängig voneinander Werte von 0 bis 8 haben, d 0 bis 280, e 0 bis 396, f 0 bis 3, g 0 bis 6 und h 0 bis 3 ist, die Summe a+b+c 2 bis 8 beträgt, die Summe c+d+h einen Wert von 1 bis 280 hat, die Summe a+b+c+d+e+f+g+h 3 bis 400 beträgt und das Verhältnis der Summen a+b+e+f+g : c+d+h 100 : 1 bis 1 : 1 beträgt.

5. Organopolysiloxane gemäß einem oder mehreren der Ansprüche 1 bis 4, dadurch gekennzeichnet, daß sie SiC-gebundene, thiolsubstituierte Kohlenwasserstoffreste und SiC-gebundene Reste mit aliphatischer Kohlenstoff-Kohlenstoff-Mehrfachbindung aufweisen.

6. Organopolysiloxane gemäß Anspruch 5, dadurch gekennzeichnet, daß das Verhältnis von SiC-gebundenen, thiolsubstituierten Kohlenwasserstoffresten zu den SiC-gebundenen Resten mit aliphatischer Kohlenstoff-Kohlenstoff-Mehrfachbindung zwischen 10 : 1 und 1 : 10 liegt.

7. Verfahren zur Herstellung von Organopolysiloxanen gemäß einem oder mehreren der Ansprüche 1 bis 6 in einem 1. Schritt durch Mischhydrolyse oder Äquilibrierung und Mischkondensation eines Silans der Formel 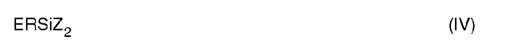 mit Verbindungen, ausgewählt aus der Gruppe bestehend aus Silanen der Formel 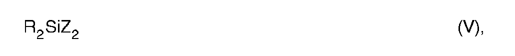 Organopolysiloxanen der Formel 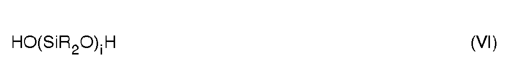 und cyclischen Siloxanen der Formel 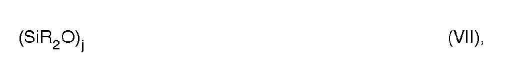 und anschließender Umsetzung der so erhaltenen, Hydroxylgruppen aufweisenden Organosiliciumverbindung in einem 2. Schritt mit Silan der Formel 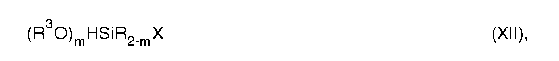 worin E, R, R³ und m die obengenannte Bedeutung hat, Z gleich oder verschieden sein kann und Hydroxylgruppe oder eine leicht hydrolysierbare Gruppe, wie Halogenatom, Alkoxyrest oder Oxycarbonylalkylrest, bedeutet, i eine ganze Zahl von 2 bis 2000 ist, j eine ganze Zahl von 3 bis 6 ist und X eine leicht abspaltbare Gruppe bedeutet, wie Halogenatom und Reste -OR³, -NR-C(=O)R, -OC(=O)R und -NR₂.

## Claims

1. Organopolysiloxane comprising at least one unit (A) of the formula 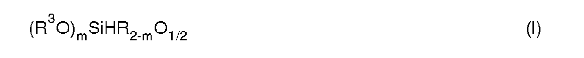 and
at least one unit (B) selected from the group of units consisting of 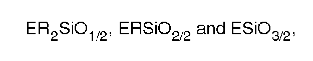 in which
the radicals R can be identical or different and are monovalent SiC-bonded substituted or unsubstituted hydrocarbon radicals having 1 to 12 carbon atoms,
the radicals R³ can be identical or different and are monovalent substituted or unsubstituted hydrocarbon radicals,
m is 1 or 2, and
E is a radical of the general formula 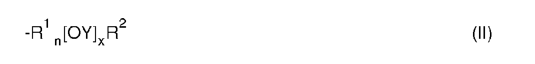
in which R¹ is an alkylene radical having 1 to 6 carbon atoms, n is 0 or 1, Y can be identical or different and is alkylene having 1 to 4 carbon atoms, R² is an alkoxy radical having 1 to 6 carbon atoms or an oxycarbonylalkyl radical having 1 to 6 carbon atoms, and x is an integer from 1 to 200.

2. Organopolysiloxane according to Claim 1, characterized in that the proportion of siloxane units (A) is between 0.2 and 67%, relative to the total number of the siloxane units present in the organopolysiloxane.

3. Organopolysiloxane according to Claim 1 or 2, characterized in that the proportion of siloxane units (B) is between 1 and 70%, relative to the total number of the siloxane units present in the organopolysiloxane according to the invention.

4. Organopolysiloxane according to one or more of Claims 1 to 3, characterized in that the organopolysiloxane is one of the formula (III) 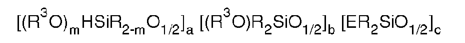 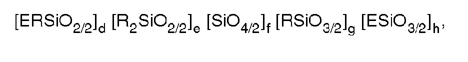 where R, E, R³ and m have the abovementioned meaning and a is from 1 to 8, b and c are each, independently of one another, from 0 to 8, d is 0 to 280, e is 0 to 396, f is 0 to 3, g is 0 to 6, and h is 0 to 3, the sum of a+b+c is 2 to 8, the sum of c+d+h is 1 to 280, the sum of a+b+c+d+e+f+g+h is 3 to 400, and the ratio of the sum of a+b+e+f+g to that of c+d+h is 100: 1 to 1:1.

5. Organopolysiloxane according to one or more of Claims 1 to 4, characterized in that the organopolysiloxane contains SiC-bonded mercapto-substituted hydrocarbon radicals and SiC-bonded radicals having an aliphatic carbon-carbon multiple bond.

6. Organopolysiloxane according to Claim 5, characterized in that the ratio of SiC-bonded mercapto-substituted hydrocarbon radicals to the SiC-bonded radicals having an aliphatic carbon-carbon multiple bond is between 10:1 and 1:10.

7. Process for preparing an organopolysiloxane according to one or more of Claims 1 to 6 by mixed hydrolysis or equilibration and mixed condensation of a silane of the formula 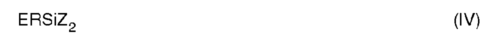 in a 1 st step with compounds selected from the group consisting of silanes of the formula 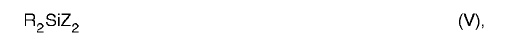 organopolysiloxanes of the formula 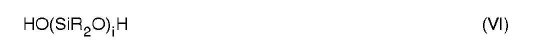 and cyclic siloxanes of the formula 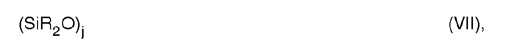 followed by reaction of the hydroxyl-containing organosilicon compound thus obtained in a 2nd step with a silane of the formula 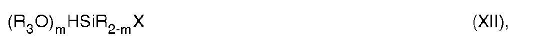 in which E, R, R³ and m have the abovementioned meaning, Z can be identical or different and is a hydroxyl group or a group which can be easily hydrolyzed, such as a halogen atom, an alkoxy radical or an oxycarbonylalkyl radical, i is an integer from 2 to 2000, j is an integer from 3 to 6, and X is a group which can be easily eliminated, such as a halogen atom and -OR³, -NR-C(=O)R, -OC(=O)R and -NR₂ radicals.

## Revendications

1. Organopolysiloxanes, qui contiennent au moins un motif (A) de formule 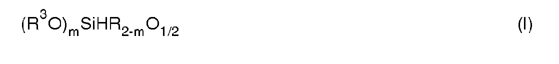 ainsi que
au moins un motif (B), choisi dans le groupe de motifs constitué de 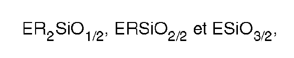 où
R peut être identique ou différent et représente des radicaux hydrocarbure monovalents, liés à Si-C, facultativement substitués, avec 1 à 12 atomes de carbone;
R³ peut être identique ou différent et représente des radicaux hydrocarbure monovalents, facultativement substitués;
m est 1 ou 2, et
E représente un radical de formule générale 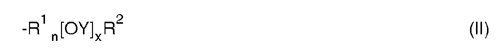 dans laquelle
R⁷ représente un radical alkylène avec 1 à 6 atomes de carbone, n est 0 ou 1 Y peut être identique ou différent et représente des radicaux alkylène avec 1 à 4 atomes de carbone, R² représente un radical alcoxy avec 1 à 6 atomes de carbone ou un radical oxycarbonylalcoyle avec 1 à 6 atomes de carbone, et x est un nombre entier de 1 à 200.

2. Organopolysiloxanes suivant la revendication 1, caractérisés en ce que la quantité de motifs siloxane (A) se situe entre 0,2 et 67%, sur base du nombre total des unités siloxane présents dans l'organopolysiloxane.

3. Organopolysiloxanes suivant la revendication 1 ou 2, caractérisés en ce que la quantité de motifs siloxane (B) se situe entre 1 et 70%, sur base du nombre total de motifs siloxane présents dans 1' organopolysiloxane suivant l'invention.

4. Organopolysiloxanes suivant l'une ou plusieurs des revendications 1 à 3, caractérisés en ce que ce sont ceux de formule (III) 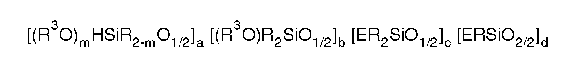 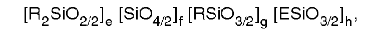 dans laquelle
R, E, R³ et m ont les significations précitées et a a une valeur comprise entre 1 et 8, b et c ont, chacun indépendamment l'un de l'autre, une valeur de O à 8, d est 0 à 280, e est 0 à 396, f est 0 à 3, g est 0 à 6 et h est 0 à 3, la somme a+b+c vaut 2 à 8, la somme c+d+h a une valeur comprise entre 1 et 280, la somme a+b+c+d+e+f+g+h vaut 3 à 400 et le rapport des sommes a+b+e+f+g:c+d+h vaut 100:1 à 1:1.

5. Organopolysiloxanes suivant l'une ou plusieurs des revendications 1 à 4, caractérisés en ce qu'ils présentent des radicaux hydrocarbure substitués par un thiol, liés à Si-C et des radicaux liés à Si-C avec une liaison multiple carbone-carbone aliphatique.

6. Organopolysiloxanes suivant la revendication 5, caractérisés en ce que le rapport des radicaux hydrocarbure substitués par un thiol, liés à Si-C aux radicaux liés à Si-C avec une liaison multiple carbone-carbone aliphatique se situe entre 10: 1 et 1:10.

7. Procédé de préparation d'organopolysiloxanes suivant l'une ou plusieurs des revendications 1 à 6, dans une première étape, par hydrolyse mixte ou équilibrage et condensation mixte d'un silane de formule 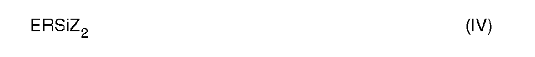 avec des composés choisis dans le groupe constitué des silanes de formule 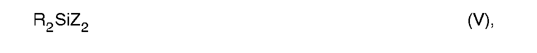 des organopolysiloxanes de formule 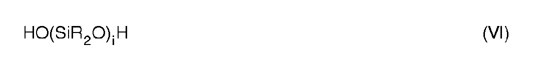 et des siloxanes cycliques de formule 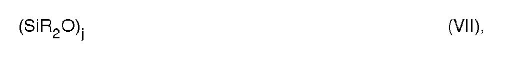 et ensuite, par réaction du composé organosilicié présentant des groupes hydroxyle ainsi obtenu, dans une deuxième étape, avec le silane de formule 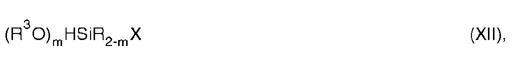 dans laquelle
E, R R³ et m ont les significations précitées, Z peut être identique ou différent et représente un groupe hydroxyle ou un groupe facilement hydrolysable, comme un atome d'halogène, un radical alcoxy ou un radical oxycarbonylalcoyle, i est un nombre entier de 2 à 2000, j est un nombre entier de 3 à 6, et X représente un groupe facilement éliminable comme un atome d'halogène et les radicaux -OR³, -NR-C(=O)R, -OC(=O)R et -NR₂.
